# EUROPEAN PATENT SPECIFICATION

(11) **EP 2 219 068 B1**
(45) Date of publication and mention of the grant of the patent: **29.05.2013**
(21) Application number: 08856754.0
(22) Date of filing: 09.09.2008
(51) Int. Cl.: G02F 1/1339, G02F 1/1345

(54) **DISPLAY DEVICE AND METHOD FOR MANUFACTURING THE SAME**
ANZEIGEVORRICHTUNG UND VERFAHREN ZU DEREN HERSTELLUNG
DISPOSITIF D'AFFICHAGE ET SON PROCÉDÉ DE FABRICATION

(30) Priority: 04.12.2007 JP 2007313854
(43) Date of publication of application: 18.08.2010
(73) Proprietor: Sharp Kabushiki Kaisha, Osaka-shi Osaka 545-8522 (JP)
(72) Inventor: TANAKA, Shinya, Osaka-shi, Osaka 545-8522 (JP); KIKUCHI, Tetsuo, Osaka-shi, Osaka 545-8522 (JP); IMAI, Hajime, Osaka-shi, Osaka 545-8522 (JP); KATAOKA, Yoshiharu, Osaka-shi, Osaka 545-8522 (JP)
(74) Representative: Müller - Hoffmann & Partner
(86) International application number: PCT/JP2008/066255
(87) International publication number: WO 2009/072336

(56) References cited:
- EP-A2- 0 444 621
- WO-A1-2004/068228
- JP-A- 6 258 662
- JP-A- 11 064 891
- JP-A- 2006 276 287
- US-A- 6 115 097
- US-A1- 2006 022 201
- US-A1- 2006 192 915

## Description

### TECHNICAL FIELD

The present invention relates to a display device and a method for manufacturing the same. More specifically, the present invention relates to a display device suitably used as a space-saving display device in which a drive circuit (driver) is integrated into a panel (built-in driver) and a method for manufacturing the same.

### BACKGROUND ART

Advantages such as thin, light, and low power consumption allow crystal liquid display devices to be used in various fields. Among such crystal display devices, a market of an active matrix liquid crystal display device comprising a thin film transistor (TFT) as a pixel switching element (driving element) is significantly growing. The reason for this growth is that the high contrast ratio, high response speed, and high performance thereof allow its use mainly in a personal computer, a TV apparatus in a mobile phone, and the like.

Recently, a driving circuit-integrated liquid crystal display device is mass-produced, in which a peripheral driving circuit (driver circuit) for driving a liquid crystal display panel is formed on the same substrate as a pixel TFT arranged in a matrix (built-in peripheral driving circuit). The reason for this is that the driving circuit-integrated liquid crystal display device can provide advantages of: a narrower frame of the panel; slimming down of the device; cost reduction owing to the unnecessity of a driver integrated circuit (IC) (reduction in the number of components of a liquid crystal display module); and reduction in the number of steps for implementation.

Monolithic technologies for integrating a peripheral driving circuit include technologies of: integrating a gate driver (scanning electrode driver, gate driving circuit) and a source driver (signal electrode driver, signal driving circuit) into a monolithic structure by using low-temperature polycrystalline silicon (p-Si), continuous grain silicon (CGS), and the like; and integrating only a gate driver into a monolithic structure by using amorphous silicon (a-Si). The former technology is more common in the present. However, the latter technology now draws attention because it has advantages of: low temperature process; availability of an inexpensive glass; the reduced number of masks; and the reduced number of steps.

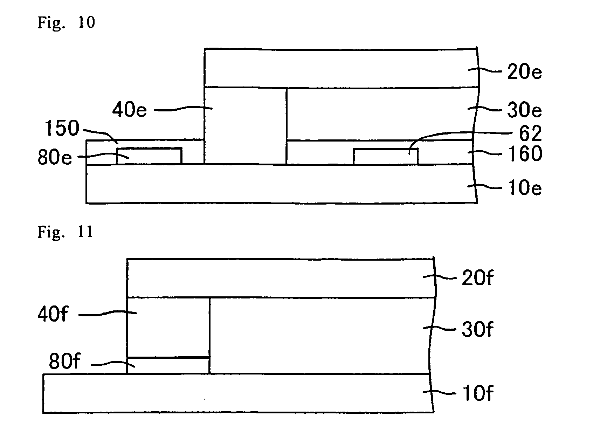

The following displays are known as exemplary liquid crystal displays with built-in gate drivers.
(1) As shown in Fig. 10, a liquid crystal display comprises: a display region surrounded by a liquid crystal sealing portion 40e bonding a bottom glass 10e and a top glass 20e; and a frame region outside of the liquid crystal sealing portion 40e. A liquid crystal 30e is injected into a space between the bottom glass 10e and the top glass 20e adhered to each other. In the display region, an insulating film 160 covers a pixel transistor 62. In the frame region, a protecting film 150 covers a vertical scanning section 80e (see Fig.18 of Patent Document 1).
(2) As shown in Fig. 11, in a liquid crystal display, a liquid crystal 30f is injected into a space between a bottom glass 10f and a top glass 20f which are bonded to each other by a liquid crystal sealing portion 40f. Further, a vertical scanning section 80f is positioned between the liquid crystal sealing portion 40f and the bottom glass 10f (see Fig. 16 of Patent Document 1).

### [Patent Document 1]

Japanese Patent No. 2581796.

US 6 115 097 A describes an active matrix type liquid crystal device with a peripheral driver circuit, the device comprising all the features if the preamble of claim 1. The peripheral driver is formed inside an area surrounded by a sealing member. That sealing member bonds together a pair of glass substrates and seals liquid crystal material therein. The peripheral driver circuit is covered with the sealing material enabling the entire device to be reduced in size. The sealing member can also have a light blocking function to avoid the need for a separate light blocking film.

WO 2004/068228 A1 describes an LCD device providing enhanced display quality. An insulating layer is formed on a first substrate. The insulating layer covers the contact portion of a switching device in which the switching device is electrically connected to a transparent electrode and has an opening for exposing a portion of the transparent electrode. A reflection electrode is electrically connected to the transparent electrode through the opening. The insulation layer covers a first portion of a driving circuit formed on the first substrate. A sealant is interposed between the first and second substrate to engage the first and second substrate and to cover a second portion of the driving circuit. Therefore, the driver circuit may operate normally, and the distortion of the signal outputted from the driver circuit may be prevented.

### DISCLOSURE OF INVENTION

However, the configuration of (1) can still improve in that the frame region (a peripheral region other than a display region in the principal surface of a display panel) is enlarged by the vertical scanning section 80e, as shown in Fig. 10. On the other hand, the configuration of (2) can still improve in that, though the frame region can be reduced because of the vertical scanning section 80f and a liquid crystal sealing region overlapping to each other, as shown in Fig. 11, moisture in the sealing member 40f may deteriorate electrical properties of the vertical scanning section 80f, leading to the lowered reliability of the product.

The present invention has been made in view of the above-mentioned state of the art. The present invention has an object to provide a display device in which a frame region is reduced while preventing decrease in reliability and a method for manufacturing the same.

The present inventors made various investigations on a method for reducing the frame region (narrowing of the frame) in a display device comprising a display panel including a pair of substrates, a sealing member positioned between the pair of substrates, and a circuit unit provided at least on one substrate of the pair of substrates. Then, the inventors found the following. A method of overlapping at least a part of the circuit unit with the sealing member deteriorates the reliability of the product because moisture in the sealing member tends to deteriorate electrical properties of the circuit. On the other hand, a method of covering a portion of the circuit unit, in which the circuit unit overlaps with the sealing member, with a moisture blocking film as well as providing the moisture blocking film in the region other than the display region prevents deterioration of electrical properties of the circuit unit by moisture in the sealing member without lowering the transmissivity of the display device. Accordingly, deterioration of display quality and reliability can be prevented. As a result, the above-mentioned problems have been admirably solved, leading to completion of the present invention.
The above objects are solved by the claimed matter according to the independent claims.

The present invention is specifically described below.

The display device of the present invention comprises a display panel including a first substrate, a second substrate, and a sealing member positioned between the first substrate and the second substrate. The first and second substrates are components of the display panel and normally include a substrate positioned backside (back substrate) and a substrate positioned on the side of a viewing screen (screen-side substrate, front substrate). The sealing member is also a component of the display panel and is normally positioned in the frame region in a frame-like shape to seal and hold a space between the first substrate and the second substrate. The display region normally includes optical elements positioned between the first substrate and the second substrate, such as a liquid crystal display element (optical element including a pair of electrodes and a liquid crystal layer interposed between the pair of electrodes), a electroluminescent (EL) element (optical element including a pair of electrodes and an EL layer interposed between the pair of electrodes).

The display panel includes at least a part of a circuit unit in the region overlapping with the sealing member on the first substrate. The circuit unit built into the display panel does not require an external circuit attached to the substrate of the display panel, leading to advantages of a thinner display panel, the reduced number of components, and the reduced number of steps for implementation. Although not particularly limited, examples of the circuit unit built in the display panel include a gate driver, a source driver, a power supply circuit, a light sensor circuit, a temperature sensor circuit, and a level shifter. An exemplary gate driver may have a configuration including a shift register and a buffer temporarily storing a selection pulse sent from the shift register. An exemplary source driver may have a configuration including a video line to which a pixel signal is applied, a sampling circuit for writing the pixel signal applied to the video line to each data line, and a shift register for controlling the operation timing of the sampling circuit. The circuit unit preferably includes a TFT. The TFT may be an amorphous silicon (a-Si) TFT, a polycrystalline silicon (p-Si) TFT, a continuous grain silicon (CGS) TFT, or a microcrystalline silicon (µc-Si) TFT. Further, though the first substrate on which a circuit unit is positioned may be either a back substrate or a front substrate, a back substrate is more suitable.

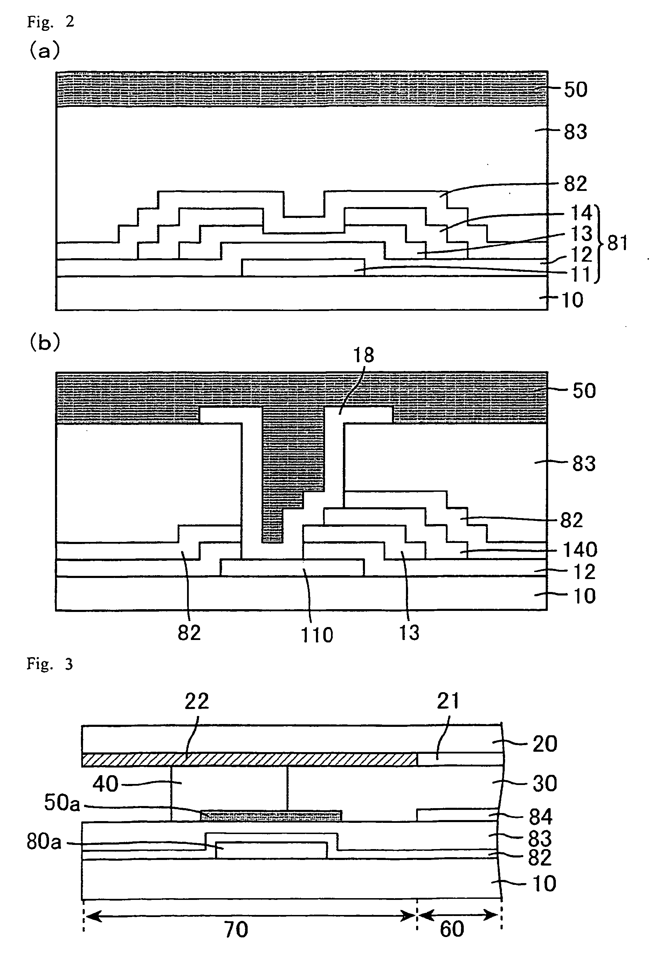

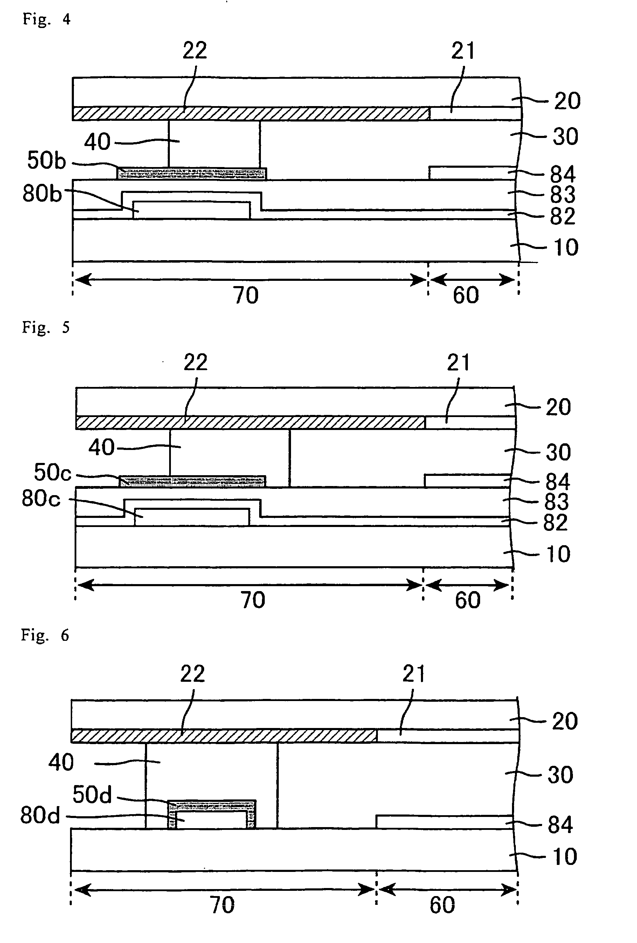

At least a part of the circuit unit overlaps with the sealing member. This reduces the frame area necessary for positioning the circuit unit, resulting in the reduction in the frame region (narrowing of frame). The circuit unit may overlap with the sealing member partially as shown in Figs. 3 to 5, or alternatively, the entire circuit unit may overlap with the sealing member as shown in Fig. 6. When the entire circuit unit overlaps with the sealing member as shown in Fig. 6, the frame region is more efficiently reduced. Further, the circuit unit may be positioned in a region extending toward the outer side from the sealing member as shown in Fig. 3, or alternatively, the circuit unit may be positioned only in a region extending toward the inner side from the sealing member as shown in Figs. 4 to 6. However, in a liquid crystal display panel, the circuit unit is preferably positioned only in a region extending toward the inner side from the sealing member because the sealing member positioned in a region extending toward the outer side from the sealing member may generate direct-current components to deteriorate the liquid crystal in the liquid crystal layer.

The display panel includes a moisture blocking film interposing between the circuit unit and the sealing member in the region overlapping with the sealing member on the first substrate. As above described, overlapping the sealing member with at least a part of the circuit unit can reduce the frame region. However, this also causes a disadvantage that moisture in the sealing member tends to deteriorate the electrical properties of the circuit unit. For example, in a case where a TFT is present in the circuit unit, moisture having reached the TFT may change the operating point of the TFT to cause a failure such as a malfunction of an on/off operation and increase in the leakage current (off-state current). The moisture blocking film covering the portion of the circuit unit overlapping with the sealing member can block moisture from the sealing member before the moisture reaches the circuit unit, resulting in the improved reliability of the product. Namely, the moisture blocking film preferably blocks moisture transfer from the sealing member to the circuit unit. The moisture blocking film may be formed only in a part of the region in which the circuit unit and the sealing member are overlapping to each other. However, the moisture blocking film is preferably formed in the entire region in which the circuit unit and the sealing member are overlapping to each other.

The moisture blocking film is provided in the region other than the display region. For example, in a case where the display device of the present invention includes a backlight behind the back substrate and displays images by using the backlight, the moisture blocking film in the display region may lower the transmissivity of the display device because the light from the backlight is absorbed by the moisture blocking film. In addition, the filmed region broadened by the moisture blocking film provided also in the display region may deteriorate the display quality due to the uneven filming. Accordingly, the moisture blocking film is preferably formed only in the frame region in order to achieve display properties free from the deterioration of the transmissivity of the display device and the uneven filming.

It is to be noted that the TFT under or in the vicinity of the sealing member may have TFT characteristics easily shifting due to the influence of the moisture. In a case where the display panel includes an interlayer insulating film on the first substrate on which the circuit unit is positioned, the interlayer insulating film may cover the portion of the circuit unit overlapping with the sealing member. However, the moisture blocking only by the interlayer insulating film made of a photosensitive resin and the like is not sufficient, and therefore, in a case where the display panel includes an interlayer insulating film on the first substrate, the moisture blocking film is preferably made of a material different from that for the interlayer insulating film in order to sufficiently block the moisture transfer from the sealing member to the circuit unit.

As long as the first substrate and the second substrate in a pair, the sealing member, the circuit unit, and the moisture blocking film are included, the display device of the present invention may or may not include another component. For example, the display device of the present invention may be an active matrix display device comprising: a gate wiring (scanning line) on the first substrate; a source wiring (signal line) perpendicular to the gate wiring; and a pixel TFT positioned at the intersection of the gate wiring and the source wiring. The display device of the present invention can be suitably used in an active matrix liquid crystal display device, an electroluminescent display device, and the like.

A preferable embodiment of the display device of the present invention is described below.
The circuit unit preferably includes a first conductive film, an insulating film covering the first conductive film, and a second conductive film that is connected to the first conductive film and is provided on the insulating film and in an opening penetrating through the insulating film, and the second conductive film in the opening is preferably covered with the moisture blocking film. In a case where an opening is formed in the circuit unit, moisture from the sealing member tends to spread throughout the circuit unit via the opening to deteriorate electrical properties of the circuit unit, particularly. In such a case, deterioration of the electrical properties of the circuit unit is effectively prevented by forming the moisture blocking film in such a manner that the opening is sealed relative to the sealing member. It is to be noted that the moisture permeability of the moisture blocking film is preferably lower than that of the insulating film.

The display panel preferably includes a pixel electrode on the first substrate and the pixel electrode is preferably made of a material that also forms the second conductive film. Since the second conductive film and the pixel electrode can be formed in the same process, the manufacturing process can be simplified. In a liquid crystal display element, the pixel electrode refers to an electrode positioned behind a liquid crystal layer of the pair of electrodes. In an EL element, the pixel electrode refers to an electrode positioned behind an EL layer of the pair of electrodes. The pixel electrode is normally positioned in the display region.

In a case where the display panel includes a pixel electrode on the first substrate and the pixel electrode is made of a material that also forms the second conductive film, presence of the moisture blocking film in the display region refers to formation of the moisture blocking film between a pair of electrodes in a liquid crystal display element. When the moisture blocking film is formed between a pair of electrodes in a liquid crystal display element, the voltage applied to the liquid crystal layer and the like is lowered, which may lead to the increased power consumption. In addition, since the electric charge tends to be accumulated in the liquid crystal layer, image persistence may be caused, leading to lowering of the display quality. Accordingly, in order to achieve both the low power consumption and prevention of image persistence, the moisture blocking film is preferably provided in the region other than the display region, and more preferably provided only in the frame region, when the display panel includes a pixel electrode on the first substrate and the pixel electrode is made of a material that also forms the second conductive film.

The moisture blocking film preferably also covers a portion of the circuit unit not overlapping with the sealing member. This moisture blocking film can also block moisture transfer from a member other than the sealing member or the outside to the circuit unit, leading to the further improved reliability of the product.' In a case where the display panel includes an input terminal (implemented terminal) supplying a signal for driving the circuit unit on the first substrate, the moisture blocking film preferably does not cover the input terminal. This allows electric connection between the input terminal and the circuit unit.

The moisture blocking film is preferably made of an inorganic material. In general, a film made of an inorganic material has lower moisture permeability than a film made of an organic material. Accordingly, a moisture blocking film made of an inorganic material can lower the moisture permeability of the moisture blocking film, leading to further improved reliability of the product. Consequently, the moisture blocking film is preferably made of an inorganic material to have lower moisture permeability.

The moisture blocking film is preferably made of an insulating material. The moisture blocking film made of a conductive material or semiconductive material may generate an interaction between the moisture blocking film and the circuit unit, leading to an adverse effect on the electrical properties of the circuit unit. Namely, a moisture blocking film made of an insulating material can block moisture transfer from the sealing member to the circuit unit without adversely affecting the electrical properties of the circuit unit. Consequently, the moisture blocking film is preferably made of an insulating material to further improve the reliability of the product.

The moisture blocking film is preferably made of at least one material selected from the group consisting of spin-on glass (SOG), silicon oxide (SiO₂), titanium oxide (TiO₂), silicon nitride (SiNₓ), and diamond-like carbon. All of these materials are insulative and inorganic. Namely, a moisture blocking film made of these inorganic materials can have lower moisture permeability without generating an electrical interaction between the moisture blocking film and the circuit unit. Accordingly, the moisture blocking film can block the moisture transfer from the sealing member to the circuit unit without adversely affecting the electrical properties of the circuit unit, resulting in further improved reliability of the product. In addition, all of these materials are considered to excellently adhere to the sealing member.

The moisture blocking film preferably has a thickness of 50 nm or more. Although it depends on the material of the moisture blocking film, the moisture blocking film having a thickness of less than 50 nm generally cannot block the moisture transfer from the sealing member to the circuit unit sufficiently. As a result, the reliability may not be sufficiently improved. Namely, the moisture blocking film having a thickness of 50 nm or more can have sufficiently-low moisture permeability, leading to the sufficient improvement of the reliability of the product. In a case where the moisture blocking film is made of SOG, the thickness thereof is preferably 4 µm or less for ensuring a stable film formation. In a case where the moisture blocking film is made of SiO₂, TiO₂, SiNₓ, or diamond-like carbon, the thickness thereof is preferably 1 µm or less for improving the production efficiency by preventing a warp, reducing a tact time, and the like.

The moisture blocking film preferably has a water concentration lower than the water concentration in the sealing member as measured by thermal desorption spectroscopy (TDS). Even when the moisture blocking film has a sufficiently-low moisture permeability, if the moisture blocking film has a water concentration higher than that in the sealing member, the moisture from the moisture blocking film may deteriorate the electrical properties of the circuit unit. Accordingly, the moisture blocking film having a water concentration lower than that in the sealing member can sufficiently suppress the deterioration of the electrical properties of the circuit unit, compared to the embodiment in which a circuit unit is directly covered with the sealing member (Fig. 11).

In the present description, "thermal desorption spectroscopy" refers to a method for measuring the water concentration by the following procedure. First, a measuring section (sample) in 10 mm × 10 mm × 10 mm is cut out of the measuring object left (kept) at 60°C and 95% RH for a month. Next, the sample is washed with acetone and then put into a load lock chamber (chamber in which a vacuum state and an atmospheric state can be selectively formed) of an analyzer. After water is removed from the surface of the sample in the load lock chamber, the sample was delivered into the test chamber. Air is evacuated from the chamber for a predetermined time, and then, the temperature is raised at the rate of 10°C/min. in vacuo (10⁻⁷ Pa or lower). The molecule desorbed from the sample due to the temperature rise is detected and the molecular mass is obtained. The number of the water molecules is calculated based on the intensity of the fragment having mass number 18 (H₂O).

The moisture blocking film preferably has a water concentration of 2.0 × 10¹⁵ pieces (number of molecules)/100 mg or less as measured by thermal desorption spectroscopy. Even when the moisture blocking film has a water concentration lower than that in the sealing member, if the moisture blocking film has a water concentration exceeding 2.0 × 10¹⁵ pieces /100 mg, moisture from the moisture blocking film may adversely affect the electrical properties of the circuit unit. Namely, the moisture blocking film having a water concentration adjusted to 2. 0 × 10¹⁵ pieces /100 mg or less can more sufficiently reduce the deterioration of the electrical properties of the circuit unit caused by moisture from the moisture blocking film. The moisture blocking film preferably has a water concentration of less than 2.0 × 10¹⁵ pieces /100 mg as measured by thermal desorption spectroscopy.

The sealing member is preferably made of an organic material. The sealing member is selected in accordance with its adherence with the substrate, production facilities, curing conditions, tact time, and the like. Accordingly, an organic material is often selected as a material for the sealing member. However, the sealing member made of an organic material generally has a high water concentration exceeding 2.0 × 10¹⁵ pieces /100 mg. In the present invention, the moisture blocking film covering a portion in which the circuit unit overlaps with the sealing member can block moisture from the sealing member, and therefore, the reliability of the product can be improved even with the sealing member made of an organic material. Examples of the organic material used for forming the sealing member include thermosetting resins such as an epoxy-based resin, ultraviolet curing resins such as an acrylic resin, and UV/thermosetting resins. The sealing member made of an organic material may be formed by screen printing, dispenser drawing, and the like. The sealing member is preferably made of an organic material.

The circuit preferably includes an amorphous silicon thin film transistor (a-Si TFT). Since µc-Si, p-Si, and CGS have less crystal defect in silicon films, properties of a µc-Si TFT, a p-Si TFT, and a CGS TFT are less likely to be deteriorated. On the other hand, a-Si has more crystal defect in a silicon film, and therefore, the properties of an a-Si TFT tends to be deteriorated. Accordingly, the present invention is particularly suitable when the circuit unit includes an a-Si TFT.

The circuit unit preferably includes a gate driver. The gate driver normally includes a shift register with a TFT. It is known that the deterioration of properties of the TFT in the shift register significantly lowers the display quality. Accordingly, the present invention is particularly suitable when the circuit unit includes a gate driver. In addition, by integrating a gate driver, it is not necessary to prepare a substrate on which a gate driver is implemented separately from the display panel. Consequently, the frame width can be reduced and the outer shape of the display module can be down-sized. In addition, since the input terminals on the substrate can be positioned on one side of the display panel collectively such that the input terminal supplying a signal for driving a gate driver and the input terminal for supplying a signal to drive a source driver can be positioned on the same side, the display panel and a signal substrate can be connected to each other on the same side. Consequently, the outer shape of the display module can be down-sized. The signal substrate is not particularly limited as long as it supplies a signal for driving a circuit unit and the like, and examples thereof include a source driver (TCP type) and a flexible printed circuit board (FPC).

The present invention further includes a method for manufacturing the display device. The method comprises a step of wet-forming a moisture blocking film by using a coating liquid for forming a moisture blocking film. This method has high throughput, and according to the method, the thickness of the moisture blocking film can be increased easily. Though not particularly limited, examples of the state of the coating liquid for forming a moisture blocking film include a fluidized material of the moisture blocking film, a material of the moisture blocking film dissolved in a solvent, and a material of the moisture blocking film dispersed in a dispersion medium.

The step of wet-forming a moisture blocking film is preferably carried out by using screen printing or offset printing. This allows easy formation of the moisture blocking film without a patterning step. In addition, since a film can be formed only in the region to be filmed, the material cost can be reduced. Examples of the material for the moisture blocking film formable by screen printing or offset printing include SOG.

The present invention further provides a method for manufacturing the display device and the method comprises a step of dry-forming a moisture blocking film by sputtering or chemical vapor deposition. This method allows formation of a moisture blocking film having an excellent film quality (fine film). In a case where a sputtering is used, so-called mask deposition can be performed. Therefore, patterning is not needed and the film is easily formed. Examples of the material for the moisture blocking film formable by sputtering or chemical vapor deposition include SiO₂, TiO₂ SiNₓ, and diamond-like carbon. The chemical vapor deposition is more preferably used to form a moisture blocking film in order to form a film having a low moisture permeability and/or a low water concentration.

### EFFECT OF THE INVENTION

In the display device of the present invention, since the circuit unit is formed on the substrate of the display panel, it is possible to obtain the advantages of a thinner display panel, the reduced number of components, and the reduced number of steps for implementation. Further, since at least a part of the circuit unit overlaps with the sealing member, the frame region can be reduced. Furthermore, since the portion in which the circuit unit overlaps with the sealing member is covered with the moisture blocking film, the reliability of the product can be improved. Moreover, since the moisture blocking film is provided in the region other than the display region, lowering of the display quality due to the reduction in the transmissivity can be avoided.

### BEST MODES FOR CARRYING OUT THE INVENTION

The present invention is mentioned in more detail below with reference to an embodiment, but not limited to only this embodiment.

### "Embodiment 1"

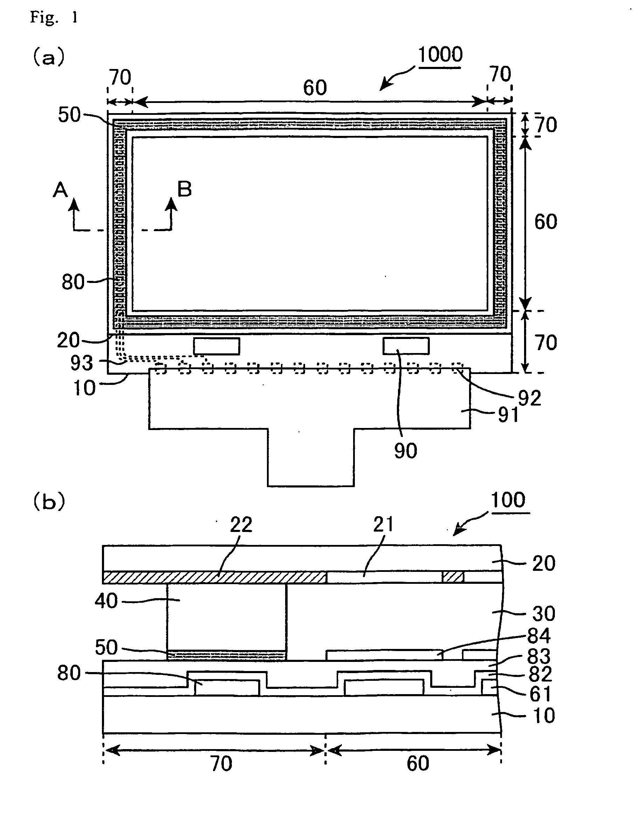

Fig. 1(a) is a schematic plan view illustrating a configuration of a liquid crystal display device of Embodiment 1.
As shown in Fig. 1(a), a liquid crystal display device 1000 according to Embodiment 1 comprises: a liquid crystal display panel 100; a source driver 90 on the liquid crystal display panel 100; and a flexible printed circuit board (FPC) 91. In the present embodiment, a gate driver (circuit unit) 80 is formed on the same substrate (TFT glass substrate mentioned later) as a pixel TFT (not illustrated) and the like. Namely, the gate driver 80 is built in the liquid crystal display panel 100. The source driver 90 is implemented on the TFT glass substrate in a chip-on-glass (COG) system. The FPC 91 is implemented on the TFT glass substrate and connected with an input terminal 92 supplying a signal for driving the gate driver 80 and the source driver 90 on the TFT glass substrate. Here, the FPC 91 and the gate driver 80 are connected via the input terminal 92 and a wiring (Wiring On Glass: WOG) 93.

Fig. 1(b) is a schematic cross-sectional view illustrating a configuration of the liquid crystal display device of Embodiment 1 taken along A-B line in Fig. 1(a).
As shown in Fig. 1(b), the liquid crystal display device 1000 according to Embodiment 1 comprises a liquid crystal display panel 100 including: a TFT glass substrate (back substrate) 10, a CF glass substrate (front substrate) 20, a liquid crystal layer 30 positioned between the TFT glass substrate 10 and the CF glass substrate 20; and a sealing member 40 positioned between the TFT glass substrate 10 and the CF glass substrate 20.

A display region 60 has a plurality of pixels 61 positioned on the TFT glass substrate 10. On the plurality of pixels 61, a passivation film (lower part of insulating film) 82, an interlayer insulating film (upper part of insulating film) 83, and a pixel electrode 84 are sequentially laminated. The pixel electrode 84 is connected with a drain electrode of the pixel TFT 61 via a conductive film (not illustrated) formed in an opening penetrating through the passivation film 82 and the interlayer insulating film 83. On the other hand, a plurality of colored layers 21 and a black matrix 22 formed in the gap in the colored layers 21 are positioned on the CF glass substrate 20. Counter electrodes (not illustrated) are positioned on the colored layers 21 and the black matrix 22. The liquid crystal display device 1000 controls the alignment of liquid crystal molecules by applying an electric field to the liquid crystal layer 30 by using the pixel electrode 84 on the TFT glass substrate 10 and the counter electrode on the CF glass substrate 20.

In a frame region 70, the gate driver 80 is positioned on the TFT glass substrate 10. Further, the passivation film 82, the interlayer insulating film 83, and a moisture blocking film 50 are sequentially laminated on the gate driver 80 towards the sealing member 40. In the present embodiment, the entire gate driver 80 is positioned so as to overlap with the sealing member 40. On the CF glass substrate 20, the black matrix 22 is positioned so as to correspond with the frame region 70.
In the following, a configuration in the vicinity of the gate driver 80 is mainly described.

Fig. 2(a) is a schematic cross-sectional view illustrating an amorphous silicon (a-Si) TFT portion in the gate driver 80. Fig. 2(b) is a schematic cross-sectional view illustrating a contact hole portion in the gate driver 80.
As shown in Fig. 2(a), an a-Si TFT 81 forming a shift register and the like in the gate driver 80 comprises a gate electrode 11, a gate insulating film 12 made of silicon nitride (SiNₓ), an a-Si layer (i layer/ n⁺ layer) 13, and a source electrode 14. On the a-Si TFT 81, the passivation film 82, the interlayer insulating film 83, and the moisture blocking film 50 are sequentially laminated towards the sealing member 40.

On the other hand, as shown in Fig. 2 (b), the contact hole in the gate driver 80 connects a gate metal wiring (first conductive film) 110 with a source metal wiring 140 via an in-circuit wiring (second conductive film) 18. The gate metal wiring 110 is formed in the same process as the gate electrode 11. The source metal wiring 140 is formed in the same process as the source electrode 14. The in-circuit wiring 18 is formed in the opening penetrating through the gate insulating film 12, the passivation film (lower part of insulating film) 82, and the interlayer insulating film (upper part of insulating film) 83. The in-circuit wiring 18 is formed together with the pixel electrode 84 provided in the display region 60 (the in-circuit wiring 18 is a member in the same layer as the pixel electrode 84), and is made of the same material as the pixel electrode 84 including indium tin oxide (ITO) and the like. In addition, the moisture blocking film 50 is positioned on the in-circuit wiring 18 and the interlayer insulating film 83.

Examples of the material forming the sealing member 40 include organic materials of: thermosetting resins such as an epoxy-based resin; ultraviolet curing resins such as an acrylic resin; and UV/thermosetting resins. The sealing member 40 may be formed by screen printing, dispenser drawing, and the like.

The passivation film 82 may be a SiNₓ film and it may be formed by sputtering, CVD, and the like. The interlayer insulating film 83 may be a photosensitive resin film and it may be formed by a photolithography and the like.

The moisture blocking film 50 is preferably made of a material having a water concentration (measured by thermal desorption spectroscopy) lower than that in the sealing member 40. The material having a water concentration of 2.0 × 10¹⁵ pieces/ 100 mg or less as measured by thermal desorption spectroscopy is suitably used. Examples thereof include: inorganic insulating films such as a SOG film, a SiO₂ film, a TiO₂ film, a SiNₓ film, and a diamond-like carbon film; and a multilayer film thereof. The moisture blocking film 50 comprising a SOG film may be formed by screen printing, offset printing, sputtering, or CVD. The moisture blocking film 50 comprising a SiO₂ film, a TiO₂ film, a SiNₓ film, or a diamond-like carbon film may be formed by sputtering, or CVD. It is to be noted that, in a case where a sputtering is used, so-called mask deposition may be performed because patterning is not needed. In addition, CVD is preferably used to form the moisture blocking film 50 having a low moisture permeability and/or a low water concentration. In order to sufficiently lower the moisture permeability, the moisture blocking film 50 preferably has a thickness of 50 nm or more.

In the liquid crystal display device according to the present embodiment, since the entire gate driver 80 is positioned so as to overlap with the sealing member 40, the frame region 70 can be reduced. Here, the opening formed in the contact hole portion in the gate driver 80 may allow the moisture from the sealing member 40 to deteriorate the properties of the a-Si TFT 81. However, since the moisture blocking film 50 covers the entire gate driver 80 so as to seal the opening in the gate driver 80 in the present embodiment, the moisture blocking film 50 blocks the moisture transfer from the sealing member 40 to the gate driver 80. As a result, the reliability is improved. In addition, the moisture blocking film 50 made of an inorganic material does not affect the TFT and the like in the gate driver 80 adversely. Further, since the moisture blocking film 50 is formed only in the frame region 70 and not in the display region 60 (not formed on the pixel electrode 84), the voltage applied to the liquid crystal layer 30 is not lowered and the display quality is not lowered either. Here, since the moisture blocking film 50 is positioned in such a manner that the input terminal 92 is not covered, it is possible to electrically connect the gate driver 80 and the source driver 90 with the input terminal 92.

In the present embodiment, the gate driver 80 is positioned in such a manner that the entire gate driver 80 overlaps with the sealing member 40. However, the gate driver 80 may also be positioned in such a manner that only a part thereof overlaps with the sealing member as shown in Figs. 3 to 5. In a case shown in Fig. 3, a gate driver 80a has a width (length in horizontal direction in Fig. 3) similar to that of the sealing member 40 and a part of the gate driver 80a is positioned not under the sealing member 40, but under the liquid crystal layer 30 (hereinafter, referred to as inner side). Further, the moisture blocking film 50a is positioned above the gate driver 80a. A part of the moisture blocking film 50a overlaps with the sealing member 40 and the rest thereof overlaps with the liquid crystal layer 30. In a case shown in Fig. 4, a gate driver 80b has a width (length in horizontal direction in Fig. 4) wider than that of the sealing member 40. Further, the boundaries of the gate driver 80b and of the sealing member 40 are substantially identical on the inner side. Furthermore, the boundary of the gate driver 80b on the side of the periphery of the substrate (hereinafter, referred to as outer side) is positioned outward compared to the boundary of the sealing member 40. In addition, the moisture blocking film 50b is positioned above the gate driver 80b in such a manner that a part of the moisture blocking film 50 overlaps with the sealing member 40. In a case shown in Fig. 5, a gate driver 80c has a width (length in horizontal direction in Fig. 5) similar to that of the sealing member 40 and a part of the gate driver 80c is positioned outward compared to the sealing member 40. Further, the moisture blocking film 50c is positioned above the gate driver 80a in such a manner that a part of the moisture blocking film 50c overlaps with the sealing member 40.

In the present embodiment, the passivation film 82 and the interlayer insulating film 83 are provided between the moisture blocking film 50 and the gate driver 80. Further, the moisture blocking film 50 is provided on the interlayer insulating film 83 above the gate driver 80. Here, an embodiment may be employed, in which a moisture blocking film 50d covers the gate driver 80d in direct contact with the upper surface and the side surface thereof as shown in Fig. 6.

Though the moisture blocking film 50 is formed only in the region in which the sealing member 40 is positioned in the present embodiment, it may be formed on the substantially entire surface of the frame region 70 in such a manner that the input terminal 92 is not covered.

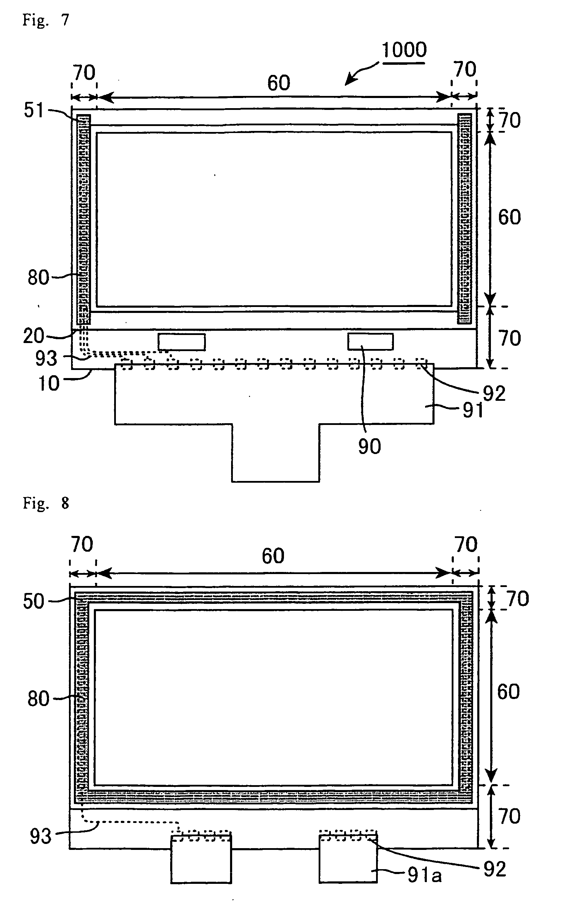

Though the moisture blocking film 50 is provided in the frame region 70 so as to surround the display region 60, the arrangement of the moisture blocking film 50 is not particularly limited as long as it is provided above the gate driver 80. For example, the moisture blocking films 51 may be provided only on two sides on which the gate drivers 80 are provided in the frame region 70 as shown in Fig. 7.

Though the source driver 90 is implemented on the TFT glass substrate 10 in the COG system in the present embodiment, the source driver 91a may be mounted on the TFT glass substrate 10 in a TCP system as shown in Fig. 8.

Though there has been described a liquid crystal display device in the present embodiment, the present invention is not limited to this. The similar effect can be obtained in an EL display device such as an organic EL display device and an inorganic EL display device.

### (Relation between water concentration and TFT characteristics)

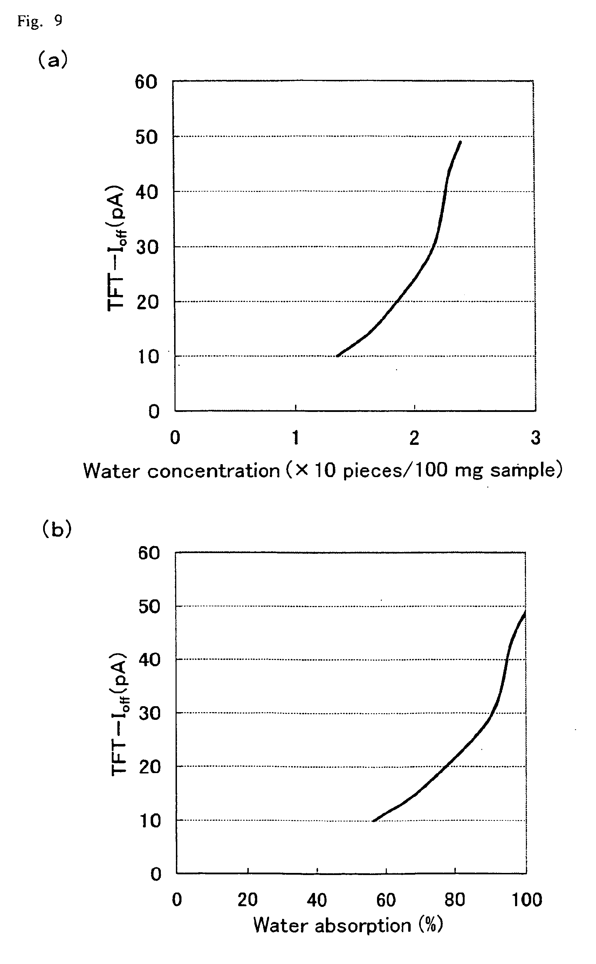

Fig. 9 (a) is a graph showing a relation between the water concentration in the film positioned right above the TFT and the TFT characteristics (off-state current). Fig. 9(b) is a graph showing a relation between the water absorption of the film positioned right above the TFT and the TFT characteristics (off-state current). Here, the water absorption refers to a relative value of the water concentration, where the water concentration of 2.4 × 10¹⁵ pieces/ 100 mg is set to be 100%.

A photosensitive resin film was positioned right above the TFT. The water concentration in the photosensitive resin film at 60°C and 95% RH and the off-state current (I_{off}) of the TFT at a gate voltage (Vg) of -1V were monitored. The results are shown in Figs. 9 (a) and 9 (b). Here, the water concentration in the photosensitive resin film was measured by thermal desorption spectroscopy described below. Specifically, first, a photosensitive resin film as a measuring object was left (kept) at 60°C and 95% RH for a month. Next, a measuring section (sample) in 10 mm × 10 mm × 10 mm was cut out of the measuring object. Then, the sample was washed with acetone and then put into a load lock chamber (chamber in which a vacuum state and an atmospheric state can be selectively formed) of an analyzer. After water was removed from the surface of the sample in the load lock chamber, the sample was delivered into the test chamber. Air was evacuated from the chamber for a predetermined time, and then, the temperature was raised at the rate of 10°C/min. in vacuo (10⁻⁷ Pa or lower). The molecule desorbed from the sample due to the temperature rise was detected and the molecular mass was obtained. The number of the water molecules was calculated based on the intensity of the fragment having mass number 18 (H₂O).

Figs. 9 (a) and 9 (b) show the significant increase in the off-state current of the TFT when the water concentration in the photosensitive resin film exceeds 2.0 × 10¹⁵ pieces/ 100 mg (water absorption of 83%). This indicates that the water concentration (water absorption) in the moisture blocking film is preferably 2.0 × 10¹⁵ pieces/ 100 mg (83%) or lower.

### BRIEF DESCRIPTION OF DRAWINGS

[Fig. 1]
   Fig. 1(a) is a schematic plan view illustrating a configuration of a liquid crystal display device of Embodiment 1. Fig. 1(b) is a schematic cross-sectional view illustrating a configuration of the liquid crystal display device of Embodiment 1 taken along A-B line in Fig. 1(a).
[Fig. 2]
   Fig. 2(a) is a schematic cross-sectional view illustrating a TFT portion in a gate driver. Fig. 2(b) is a schematic cross-sectional view illustrating a contact hole portion in the gate driver.
[Fig. 3]
   Fig. 3 is a schematic cross-sectional view illustrating an alternative configuration of the liquid crystal display device according to Embodiment 1.
[Fig. 4]
   Fig. 4 is a schematic cross-sectional view illustrating an alternative configuration of the liquid crystal display device according to Embodiment 1.
[Fig. 5]
   Fig. 5 is a schematic cross-sectional view illustrating an alternative configuration of the liquid crystal display device according to Embodiment 1.
[Fig. 6]
   Fig. 6 is a schematic cross-sectional view illustrating an alternative configuration of the liquid crystal display device according to Embodiment 1.
[Fig. 7]
   Fig. 7 is a schematic cross-sectional view illustrating an alternative configuration of the liquid crystal display device according to Embodiment 1.
[Fig. 8]
   Fig. 8 is a schematic cross-sectional view illustrating an alternative configuration of the liquid crystal display device according to Embodiment 1.
[Fig. 9]
   Fig. 9 (a) is a graph showing a relation between the water concentration in a film positioned right over a TFT and the TFT characteristics (off-state current). Fig. 9(b) is a graph showing a relation between the water absorption of a film positioned right over a TFT and the TFT characteristics (off-state current).
[Fig. 10]
   Fig. 10 is a schematic cross-sectional view illustrating a configuration of a conventional liquid crystal display device.
[Fig. 11]
   Fig. 11 is a schematic cross-sectional view illustrating a configuration of a conventional liquid crystal display device.

### EXPLANATION OF NUMERALS AND SYMBOLS

10: TFT glass substrate (Back substrate)
10e, 10f: Bottom glass
11: Gate electrode
12: Gate insulating film
13: a-Si layer (i layer/ n⁺ layer)
14: Source electrode
18: In-circuit wiring (Second conductive film)
20: CF glass substrate (Front substrate)
20e, 20f: Upper glass
21: Colored layer
22: Black matrix
30: Liquid crystal layer
30e, 30f: Liquid crystal
40: Sealing member
40e, 40f: Liquid crystal sealing portion
50, 50a to 50d: Moisture blocking film
60: Display region
61: Pixel TFT
62: Pixel transistor
70: Frame region
80, 80a to 80d: Gate driver (Circuit unit)
80e, 80f: Vertical scanning section
81: Amorphous silicon thin film transistor
82: Passivation film (Lower part of insulating film)
83: Interlayer insulating film (Upper part of insulating film)
84: Pixel electrode
90, 91a: Source driver
91: Flexible printed wiring board
92: Input terminal
93: Wiring
100: Liquid crystal display panel
110: Gate metal wiring (First conductive film)
140: Source metal wiring
150: Protecting film
160: Insulating film
1000: Liquid crystal display device

## Claims

1. A display device (1000) comprising:
a display panel (100) including a first substrate (10), a second substrate (20), and a sealing member (40) positioned between the first substrate (10) and the second substrate (20).
wherein the display panel (100) includes at least a part of a circuit unit (80) and a moisture blocking film (50, 50a, 50b, 50c, 50d) in a region overlapping with the sealing member (40) on the first substrate (10),
the moisture blocking film (50, 50a, 50b, 50c, 50d) is provided in a region other than a display region (60) and interposed between the circuit unit (80) and the sealing member (40),
the circuit unit (80) includes a first conductive film (110), an insulating film covering the first conductive film (110), and a second conductive film (18) that is connected to the first conductive film (110) and is provided on the insulating film and in an opening penetrating through the insulating film,
the second conductive film (18) in the opening is covered with the moisture blocking film (50, 50a, 50b, 50c, 50d), and
the display panel (100) includes a pixel electrode (84) on the first substrate (10) **characterized in that** the pixel electrode (84) is made of a material that also forms the second conductive film(18).

2. The display device (1000) according to Claim 1.
wherein the moisture blocking film (50, 50a, 50b, 50c, 50d) also covers a portion of the circuit unit (80) not overlapping with the sealing member (40).

3. The display device (1000) according to Claim 1 or 2,
wherein the display panel (100) includes an input terminal (92) supplying a signal for driving the circuit unit (80) on the first substrate (10), and the input terminal (92) is not covered with the moisture blocking film (50, 50a, 50b, 50c. 50d).

4. The display device (1000) according to any one of Claims 1 to 3,
wherein the moisture blocking film (50, 50a, 50b, 50c. 50d) is made of an inorganic material.

5. The display device (1000) according to any one of Claims 1 to 4,
wherein the moisture blocking film (50. 50a, 50b, 50c, 50d) is made of an insulating material.

6. The display device (1000) according to any one of Claims 1 to 5,
wherein the moisture blocking film (50, 50a, 50b, 50c, 50d) is made of at least one material selected from the group consisting of spin-on glass, silicon oxide, titanium oxide, silicon nitride, and diamond-like carbon.

7. The display device (1000) according to any one of Claims 1 to 6,
wherein the moisture blocking film (50, 50a, 50b, 50c, 50d) has a water concentration lower than a water concentration in the sealing member (40) as measured by thermal desorption spectroscopy.

8. The display device (1000) according to any one of Claims 1 to 7,
wherein the moisture blocking film(50, 50a, 50b, 50c, 50d) has a water concentration of 2.0 x 10¹⁵ pieces/100 mg or lower as measured by a thermal desorption spectroscopy.

9. The display device (1000) according to any one of Claims 1 to 8,
wherein the moisture blocking film (50, 50a, 50b, 50c, 50d) blocks moisture transfer from the sealing member (40) to the circuit unit (80).

10. The display device (1000) according to any one of Claims 1 to 9,
wherein the sealing member (40) is made of an organic material.

11. The display device (1000) according to any one of Claims 1 to 10.
wherein the circuit unit (80) includes an amorphous silicon thin film transistor.

12. The display device (1000) according to any one of Claims 1 to 11,
wherein the circuit unit (80) includes a gate driver.

13. A method for manufacturing the display device (1000) according to any one of Claims I to 12, the method comprising a step of
wet-forming aspin-on glass moisture blocking film (50, 50a, 50b, 50c, 50d) by using a coating liquid for forming a spin-on glass moisture blocking film (50. 50a, 50b, 50c, 50d).

14. The method for manufacturing the display device (1000) according to Claim 13.
wherein the step of wet-forming a spin-on glass moisture blocking film (50, 50a, 50b, 50c, 50d) includes forming a spin-on glass moisture blocking film (50. 50a, 50b, 50c, 50d) by screen printing or offset printing.

15. A method for manufacturing the display device (1000) according to any one of Claims 1 to 12, the method comprising a step of
dry-forming a moisture blocking film (50, 50a, 50b, 50c, 50d) by sputtering or chemical vapor deposition.

## Patentansprüche

1. Eine Anzeigevorrichtung (1000), umfassend:
ein Anzeigefeld (100), welches ein erstes Substrat (10), ein zweites Substrat (20) und ein Dichtungselement (40) umfasst, welches zwischen dem ersten Substrat (10) und dem zweiten Substrat (20) positioniert ist,
wobei das Anzeigefeld (100) mindestens einen Teil einer Schaltkreiseinheit (80) und einen Feuchtigkeitsblockierungsfilm (50, 50a, 50b, 50c, 50c) in einer Region umfasst, welche mit dem Dichtungselement (40) auf dem ersten Substrat (10) überlappt,
der Feuchtigkeitsblockierungsfilm (50, 50a, 50b, 50c, 50c) in einer Region vorgesehen ist, welche nicht eine Anzeigeregion (60) ist und zwischen der Schaltkreiseinheit (80) und dem Dichtungselement (40) eingefügt ist,
die Schaltkreiseinheit (80) einen ersten leitfähigen Film (110), einen isolierenden Film, welcher den ersten leitfähigen Film (110) bedeckt, und einen zweiten leitfähigen Film (18) umfasst, welcher mit dem ersten leitfähigen Film (110) verbunden ist und auf dem isolierenden Film und in einer Öffnung, welche den isolierenden Film durchdringt, vorgesehen ist,
der zweite leitfähige Film (18) in der Öffnung mit dem Feuchtigkeitsblockierungsfilm (50, 50a, 50b, 50c, 50c) bedeckt ist, und
das Anzeigefeld (100) eine Pixelelektrode (84) auf dem ersten Substrat (10) umfasst,
**dadurch gekennzeichnet, dass**
die Pixelelektrode (84) aus einem Material ist, welches auch den zweiten leitfähigen Film (18) bildet.

2. Die Anzeigevorrichtung (1000) gemäß Anspruch 1,
wobei der Feuchtigkeitsblockierungsfilm (50, 50a, 50b, 50c, 50c) auch einen Teil der Schaltkreiseinheit (80) bedeckt, welche nicht mit dem Dichtungselement (40) überlappt.

3. Die Anzeigevorrichtung (1000) gemäß Anspruch 1 oder 2,
wobei das Anzeigefeld (100) ein Eingabeterminal (92) umfasst, welches ein Signal zum Ansteuern der Schaltkreiseinheit (80) auf dem ersten Substrat (10) bereitstellt, und das Eingabeterminal (92) nicht mit dem Feuchtigkeitsblockierungsfilm (50, 50a, 50b, 50c, 50c) bedeckt ist.

4. Die Anzeigevorrichtung (1000) gemäß einem der Ansprüche 1 bis 3,
wobei der Feuchtigkeitsblockierungsfilm (50, 50a, 50b, 50c, 50c) aus einem anorganischen Material ist.

5. Die Anzeigevorrichtung (1000) gemäß einem der Ansprüche 1 bis 4,
wobei der Feuchtigkeitsblockierungsfilm (50, 50a, 50b, 50c, 50c) aus einem isolierenden Material ist.

6. Die Anzeigevorrichtung (1000) gemäß einem der Ansprüche 1 bis 5,
wobei der Feuchtigkeitsblockierungsfilm (50, 50a, 50b, 50c, 50c) aus mindestens einem Material ist, welches ausgewählt ist aus der Gruppe bestehend aus Spin-on Glass, Siliziumoxid, Titanoxid, Siliziumnitrid und diamantähnlicher Kohlenstoff.

7. Die Anzeigevorrichtung (1000) gemäß einem der Ansprüche 1 bis 6,
wobei der Feuchtigkeitsblockierungsfilm (50, 50a, 50b, 50c, 50c) eine Wasserkonzentration aufweist, welche geringer ist als eine Wasserkonzentration in dem Dichtungselement (40), wie durch Temperatur-programmierte Desorption gemessen.

8. Die Anzeigevorrichtung (1000) gemäß einem der Ansprüche 1 bis 7,
wobei der Feuchtigkeitsblockierungsfilm (50, 50a, 50b, 50c, 50c) eine Wasserkonzentration von 2,0 × 10¹⁵ Teile/ 100 mg oder geringer aufweist, wie durch Temperatur-programmierte Desorption gemessen.

9. Die Anzeigevorrichtung (1000) gemäß einem der Ansprüche 1 bis 8,
wobei der Feuchtigkeitsblockierungsfilm (50, 50a, 50b, 50c, 50c) Feuchtigkeitstransfer von dem Dichtungselement (40) zu der Schaltkreiseinheit (80) blockiert.

10. Die Anzeigevorrichtung (1000) gemäß einem der Ansprüche 1 bis 9, wobei das Dichtungselement (40) aus einem organischem Material ist.

11. Die Anzeigevorrichtung (1000) gemäß einem der Ansprüche 1 bis 10,
wobei die Schaltkreiseinheit (80) einen Dünnfilmtransistor mit amorphen Silizium umfasst.

12. Die Anzeigevorrichtung (1000) gemäß einem der Ansprüche 1 bis 11, wobei die Schaltkreiseinheit (80) einen Gate-Treiber umfasst.

13. Ein Verfahren zum Herstellen der Anzeigevorrichtung (1000) gemäß einem der Ansprüche 1 bis 12, wobei das Verfahren einen Schritt umfasst von
Nass-Bilden eines Spin-on Glass Feuchtigkeitsblockierungsfilms (50, 50a, 50b, 50c, 50c) durch Verwenden einer Beschichtungsflüssigkeit zum Bilden eines Spin-on Glass Feuchtigkeitsblockierungsfilms (50, 50a, 50b, 50c, 50c).

14. Das Verfahren zum Herstellen der Anzeigevorrichtung (1000) gemäß Anspruch 13,
wobei der Schritt des Nass-Bildens eines Spin-on Glass Feuchtigkeitsblockierungsfilms (50, 50a, 50b, 50c, 50c) umfasst Bilden eines Spin-on Glass Feuchtigkeitsblockierungsfilms (50, 50a, 50b, 50c, 50c) durch Siebdruck oder Offsetdruck.

15. Ein Verfahren zum Herstellen der Anzeigevorrichtung (1000) gemäß einem der Ansprüche 1 bis 12, wobei das Verfahren einen Schritt umfasst von
Trocken-Bilden eines Spin-on Glass Feuchtigkeitsblockierungsfilms (50, 50a, 50b, 50c, 50c) durch Sputtern oder chemische Gasphasenabscheidung.

## Revendications

1. Dispositif d'affichage (1000) comportant :
un panneau d'affichage (100) comprenant un premier substrat (10), un deuxième substrat (20) et un organe d'étanchéisation (40), positionné entre le premier substrat (10) et le deuxième substrat (20),
dans lequel le panneau d'affichage (100) comprend au moins une partie d'une unité de circuit (80) et un film anti-humidité (50, 50a, 50b, 50c, 50d) dans une région se recouvrant avec l'organe d'étanchéisation (40) sur le premier substrat (10) ;
le film anti-humidité (50, 50a, 50b, 50c, 50d) est placé dans une région autre qu'une région d'affichage (60), et interposé entre l'unité de circuit (80) et l'organe d'étanchéisation (40),
l'unité de circuit (80) comprend un premier film conducteur (110), un film d'isolation couvrant le premier film conducteur (110), et un deuxième film conducteur (18), relié au premier film conducteur (110), et placé sur le film d'isolation et dans une ouverture pénétrant au travers du film d'isolation,
le second film conducteur (18) placé dans l'ouverture est couvert par le film anti-humidité (50, 50a, 50b, 50c, 50d) et
le panneau d'affichage (100) comprend une électrode de pixel (84) sur le premier substrat (10), **caractérisé en ce que** l'électrode de pixel (84) est constituée d'un matériau formant également le deuxième film conducteur (18).

2. Dispositif d'affichage (1000) selon la revendication 1,
dans lequel le film anti-humidité (50, 50a, 50b, 50c, 50d) couvre également une partie de l'unité de circuit (80) ne se recouvrant pas avec l'organe d'étanchéisation (40).

3. Dispositif d'affichage (1000) selon la revendication 1 ou 2,
dans lequel le panneau d'affichage (100) comporte une borne d'entrée (92) fournissant un signal permettant de commander l'unité de circuit (80) sur le premier substrat (10), et la borne d'entrée (92) n'est pas couverte par le film anti-humidité (50, 50a, 50b, 50c, 50d).

4. Dispositif d'affichage (1000) selon l'une quelconque des revendications 1 à 3,
dans lequel le film anti-humidité (50, 50a, 50b, 50c, 50d) est constitué d'un matériau inorganique.

5. Dispositif d'affichage (1000) selon l'une quelconque des revendications 1 à 4,
dans lequel le film anti-humidité (50, 50a, 50b, 50c, 50d) est constitué d'un matériau isolant.

6. Dispositif d'affichage (1000) selon l'une quelconque des revendications 1 à 5,
dans lequel le film anti-humidité (50, 50a, 50b, 50c, 50d) est constitué d'au moins un matériau choisi dans le groupe comportant le verre d'enduction (spin-on glass), l'oxyde de silicium, l'oxyde de titane, le nitrure de silicium et le carbone sous la forme du diamant.

7. Dispositif d'affichage (1000) selon l'une quelconque des revendications 1 à 6,
dans lequel le film anti-humidité (50, 50a, 50b, 50c, 50d) possède une concentration en eau inférieure à une concentration en eau dans l'organe d'étanchéisation (40), mesurée par spectroscopie à désorption thermique.

8. Dispositif d'affichage (1000) selon l'une quelconque des revendications 1 à 7,
dans lequel le film anti-humidité (50, 50a, 50b, 50c, 50d) possède une concentration en eau de 2,0 × 10¹⁵ éléments par 100 mg, ou une valeur inférieure, mesurée par spectroscopie à désorption thermique.

9. Dispositif d'affichage (1000) selon l'une quelconque des revendications 1 à 8,
dans lequel le film anti-humidité (50, 50a, 50b, 50c, 50d) empêche le transfert d'humidité entre l'organe d'étanchéisation (40) et l'unité de circuit (80).

10. Dispositif d'affichage (1000) selon l'une quelconque des revendications 1 à 9,
dans lequel l'organe d'étanchéisation (40) est constitué d'un matériau organique.

11. Dispositif d'affichage (1000) selon l'une quelconque des revendications 1 à 10,
dans lequel l'unité de circuit (80) comporte un transistor à couche mince en silicium amorphe.

12. Dispositif d'affichage (1000) selon l'une quelconque des revendications 1 à 11,
dans lequel l'unité de circuit (80) comporte un circuit de commande de grille.

13. Procédé de fabrication du dispositif d'affichage (1000) selon l'une quelconque des revendications 1 à 12, le procédé comportant une étape :
de formation par voie humide d'un film anti-humidité en verre d'enduction (50, 50a, 50b, 50c, 50d) en utilisant un liquide à déposer permettant de fabriquer un film anti-humidité en verre d'enduction (50, 50a, 50b, 50c, 50d).

14. Procédé de fabrication du dispositif d'affichage (1000) selon la revendication 13,
dans lequel l'étape de formation par voie humide d'un film anti-humidité en verre d'enduction (50, 50a, 50b, 50c, 50d) comporte la fabrication d'un film anti-humidité en verre d'enduction (50, 50a, 50b, 50c, 50d) par sérigraphie ou impression offset.

15. Procédé de fabrication du dispositif d'affichage (1000) selon l'une quelconque des revendications 1 à 12, le procédé comportant une étape :
de formation par voie sèche d'un film anti-humidité (50, 50a, 50b, 50c, 50d) par pulvérisation cathodique ou dépôt chimique en phase vapeur.
